# EUROPÄISCHE PATENTSCHRIFT

(11) **EP 1 554 158 B1**
(45) Veröffentlichungstag und Bekanntmachung des Hinweises auf die Patenterteilung: **13.12.2006**
(21) Anmeldenummer: 03700039.5
(22) Anmeldetag: 15.01.2003
(51) Int. Cl.: B60N 2/44, A47C 7/46

(54) **ADAPTIVES PNEUMATISCHES SITZ- UND LEHNKISSEN FÜR FAHR- UND FLUGZEUGE**
ADAPTIVE PNEUMATIC SEAT AND BACKREST CUSHIONS FOR VEHICLES AND AIRPLANES
COUSSIN PNEUMATIQUE D'ASSISE ET DE DOSSIER ADAPTATIF DESTINE A DES VEHICULES ET DES AVIONS

(30) Priorität: 18.07.2002 DE 10232625
(43) Veröffentlichungstag der Anmeldung: 20.07.2005
(73) Patentinhaber: Prospective Concepts AG, 8152 Glattbrugg (CH)
(72) Erfinder: LEUTERT, Rudi, CH-4934 Madiswil (CH)
(74) Vertreter: Salgo, Reinhold Caspar
(86) Internationale Anmeldenummer: PCT/CH2003/000017
(87) Internationale Veröffentlichungsnummer: WO 2004/009399

(56) Entgegenhaltungen:
- DE-A- 4 106 862
- FR-A- 2 727 066
- GB-A- 2 191 690
- US-A- 5 687 438

## Beschreibung

Die vorliegende Erfindung betrifft ein adaptives pneumatisches Sitz- und Lehnkissen für Fahr- und Flugzeuge nach dem Oberbegriff des Patentanspruches 1. Pneumatische Sitz- und Lehnkissen sind an sich bekannt (siehe z.B. FR-A-2727066). Sie bestehen in der Regel aus einer Vielzahl von nebeneinandergereihten Luftschläuchen, welche über ein gemeinsames Ventil be- und entlüftet werden können und gleichen damit in Aufbau und Form der bekannten Luftmatratze. Eine gewisse Adaptionsmöglichkeit besteht darin, einzelne Schläuche auf unterschiedliche Luftdrucke zu bringen, wodurch Form und Weichheit in beschränktem Umfang variiert werden können. Für den praktischen Einsatz werden solche Kissen noch mit einem textilen Überzug versehen. Die Grundstruktur der Schläuche jedoch bleibt sichtbar - und für ein Kissen wesentlich - auch spürbar.

Die Aufgabe der vorliegenden Erfindung ist die Schaffung eines in weiten Bereichen adaptiven Sitz- und Lehnkissens, welches hohen Ansprüchen im Bereiche des Sitzkomforts zu genügen vermag, gegenüber konventionellen Schaumstoffkissen eine spürbare Gewichtsersparnis bringen kann, und bei dessen Herstellung einfach auf bestehende Sitzschalenkonstruktionen Rücksicht genommen werden kann.

Die Lösung der gestellten Aufgabe ist wiedergegeben im Patentanspruch 1 hinsichtlich der wesentlichen Merkmale, in den weiteren Patentansprüchen hinsichtlich weiterer vorteilhafter Merkmale. Anhand der beigefügten Zeichnung wird die Erfindung näher erläutert.

Es zeigen
- Fig. 1: eine Perspektive eines ersten Ausführungsbeispiels,
- Fig. 2: einen Längsschnitt durch einen Teil des ersten Ausführungsbeispiels
- Fig. 3a, b: ein Detail von Fig. 2 im nicht operativen und im operativen Zustand,
- Fig. 4a, b: eine Variante zu Fig. 3a, b,
- Fig. 5: Das selbe Detail wie in Fig. 3a, b in einer zweiten Ausführungsform,
- Fig. 6: ein Herstellungsschritt zum Detail von Fig. 3a,b,
- Fig. 7: eine erfindungsgemässe Unterteilung von Stegen,
- Fig. 8: einen Querschnitt durch das erste Ausführungsbeispiel,
- Fig. 9: eine Perspektive eines zweiten Ausführungsbeispiels.
- Fig. 10: eine Perspektive eines dritten Ausführungsbeispiels.
- Fig. 11: eine Perspektive eines vierten Ausführungsbeispiels.

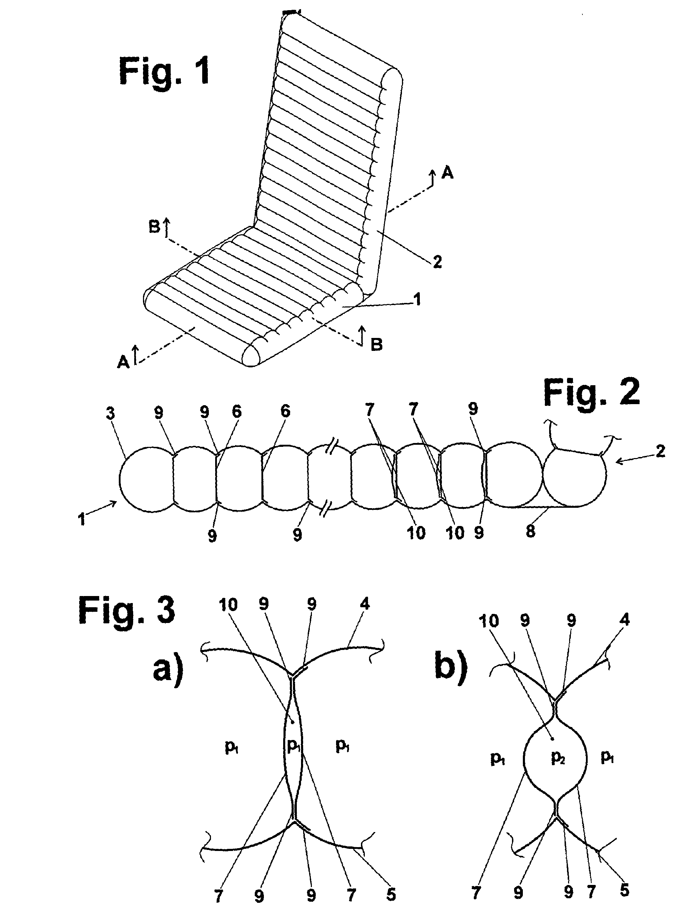

Fig. 1 ist eine perspektivische Darstellung eines ersten Ausführungsbeispieles eines erfindungsgemässen Sitz- und Lehnkissens, hier in einer einfachen Ausführung, beispielsweise für ein Massenverkehrsmittel. Es ist gegliedert in ein Sitzkissen 1 und ein Lehnkissen 2. Diese können einzeln ausgeführt oder zusammengefügt sein. Ein allfälliger Sitzüberzug ist entfernt. Nicht dargestellt ist ferner die eigentliche Sitzstruktur, da Stand der Technik und nicht Erfindungsgegenstand.

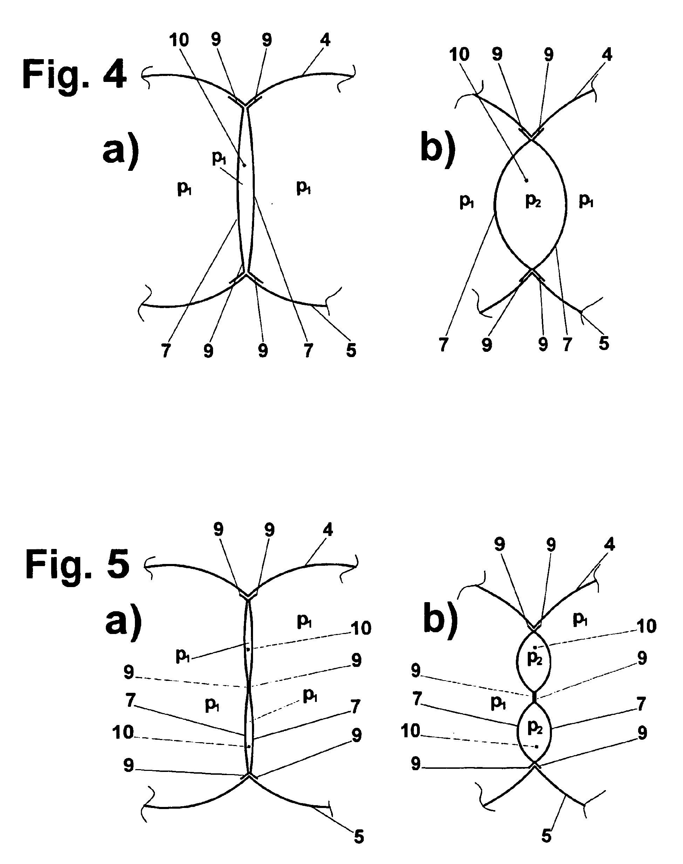

Fig. 2 ist die Darstellung eines Schnittes AA durch das Sitzkissen 1 und zeigt in schematischer Weise dessen inneren Aufbau: Es weist eine Hülle 3 auf, gegliedert in eine Oberhaut 4 und eine Unterhaut 5. Zwischen Ober- und Unterhaut 4, 5 verlaufen zweierlei Stege: einfache Stege 6 und doppelte Stege 7. Mit der Anzahl der doppelten Stege 7 wächst auch der Grad der Adaptionsmöglichkeit, wie in den Fig. 3 und 4 weiter ausgeführt wird.

Die Stege 6, 7 sind mit Ober- und Unterhaut 4, 5 verbunden durch Kleben oder Schweissen. Sowohl die Hülle 3 als auch die Stege 6, 7 sind aus gasdichtem Material gefertigt, wie Kunststoff-Folien geeigneter Stärke oder kunststoffkaschiertem Gewebe. Mit Blick auf die Sicherheit werden hier vorzugsweise schlecht brennende und/oder flammhemmend ausgerüstete Textilien verwendet.

Im Schnitt gemäss Fig. 2 sind Sitz- und Lehnkissen 1, 2 durch ein vorzugsweise textiles Band 8 verbunden.

Die in Fig. 2, 3, 4 und 5 dargestellten Bauweisen gelten im Sinne der Erfindung für beide Kissen 1, 2.

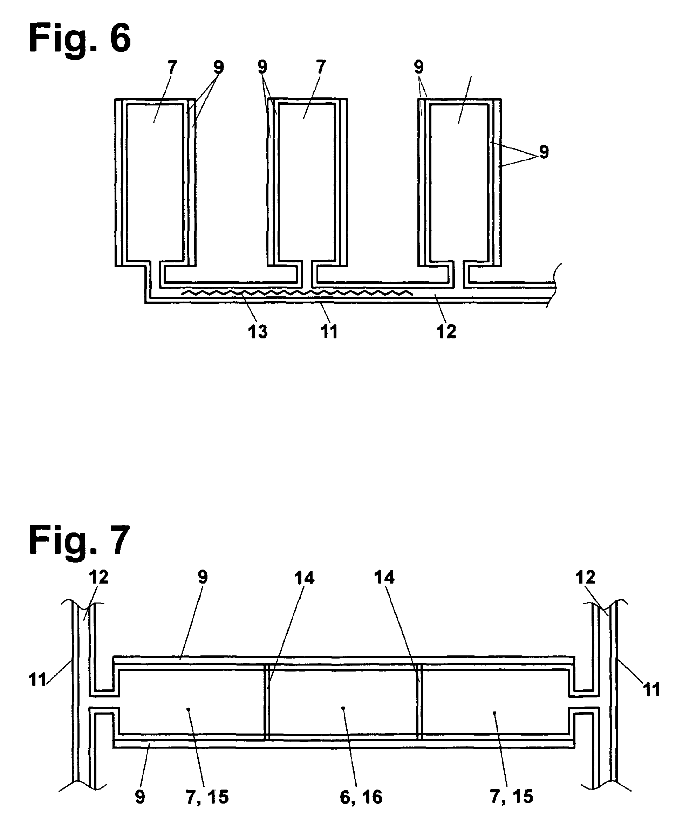

Die einfach ausgeführten Stege 6 sind, wie dargestellt, mit Ober- und Unterhaut 4, 5 entlang eines Streifens 9 verbunden. Bei den doppelt ausgeführten Stegen 7 liegen zwei Ausführungsvarianten vor, wie in Fig. 3, 4 dargestellt; die Darstellung in Fig. 2 entspricht jener von Fig. 3. In dieser ersten Ausführungsvariante ist der eine Steg 7 mit der Hülle 3 verbunden, wie zu den einfachen Stegen 6 ausgeführt. Der zweite Steg 7 ist - wiederum entlang von zwei Streifen 9 mit dem ersten Steg 7 verbunden. Ein dadurch entstehender Hohlraum 10 ist gegenüber dem restlichen Inneren des Sitzkissens 1 luftdicht abgeschlossen. Die Druckluftzufuhr und die Entlüftung geschieht bei beiden Ausführungsvarianten beispielsweise über einen im Inneren des Sitzes 1 angeordneten Schlauch, welcher bei jedem Paar oder bei ausgewählten Paaren von Stegen 7 eine Abzweigung aufweist. Selbstverständlich kann auch jeder Hohlraum 10 seine eigene Druckluftzufuhr aufweisen. Eine zweite Art der Luftführung zu den doppelten Stegen wird anhand von Fig. 6 näher erläutert.

Fig. 5 stellt eine zweite Form der doppelten Stege 7 dar. Entlang zweier Streifen 9 sind die doppelten Stege 7 ein weiteres mal miteinander verbunden wodurch zwei Hohlräume 10 entstehen. Auch Stege 7 mit drei und mehr Hohlräumen sind erfindungsgemäss.

Im Inneren des Kissens 1 herrscht ein Luftdruck p₁. Durch - nachfolgend noch im Einzelnen zu beschreibende - Luftleitungen wird den Zwischenräumen zwischen den doppelten Stegen 7 Luft zugeführt. Sofern deren Druck p₂ grösser ist als p₁, werden die Stege 7 ausgewölbt und gehen von der in Fig. 3a,

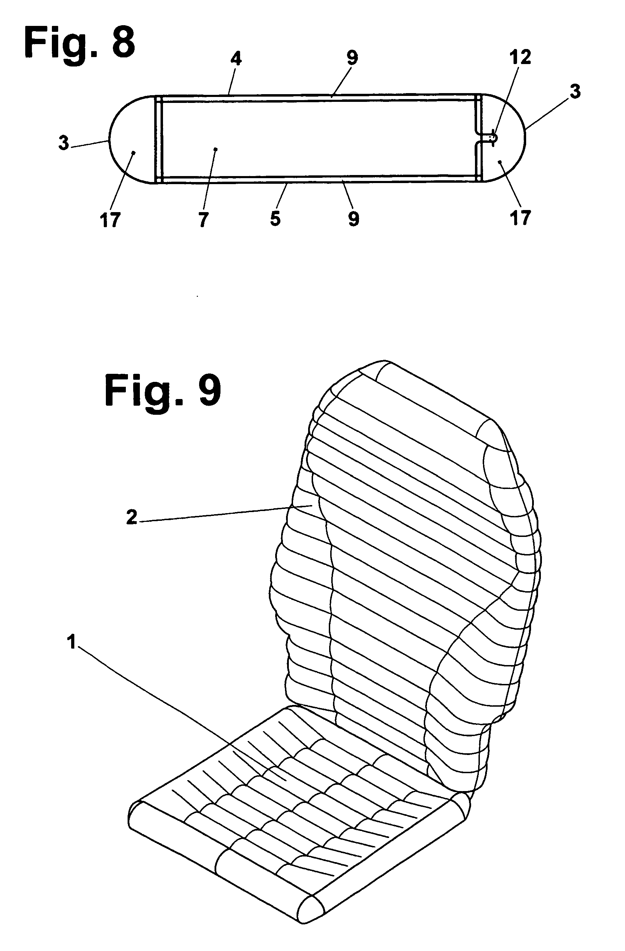

Fig. 4a und Fig 5a gezeigten Form über in jene gemäss Fig. 3b, Fig. 4b und Fig 5b. Es entstehen zwischen den Stegen 7 also die Hohlräume 10, deren Höhe mit zunehmendem Überdruck Δp = p₂-p₁ abnimmt. Damit kann die Form des Sitzkissens 1 verändert werden. Sind doppelte Stege 7 vor allem im hinteren Teil des Sitzkissens 1 angeordnet, so kann damit dessen Neigung variiert werden. Weitere Variationsmöglichkeiten sind bei der Beschreibung von Fig. 8 erläutert.

Fig. 3, 4 stellen die unterschiedlichen Verbindungsmöglichkeiten der Stege 7 mit der Hülle 3 dar. In Fig. 3 ist ein Steg 7 entlang zweier Streifen 9 je mit Ober- und Unterhaut 4, 5 verbunden. Der zweite Steg 7, etwas weniger hoch ausgeführt als der erste, ist mit dem ersten Steg 7 wiederum entlang zweier Streifen 9 verbunden.

In Fig. 4 ist die zweite Variante dargestellt. Hier sind beide Stege 7 in gleicher Art entlang je eines Streifens 9 mit Ober- und Unterhaut verbunden.

Herstellungsmässig ist die erste Variante gemäss Fig. 3 etwas einfacher, dafür ergibt die zweite Variante gemäss Fig. 4 die grössere Adaptionsmöglichkeit.

Fig. 6 zeigt einen Herstellungsschritt der doppelten Stege 7 nach der ersten Variante gemäss Fig. 3. Das Material der Stege 7 wird zugeschnitten; dasjenige für den ersten Steg 7 um die Breite von zwei Streifen 9 breiter als jenes des zweiten Steges 7. Anschliessend werden zwei Materiallagen aufeinandergelegt und entlang der inneren Streifen 9 verschweisst oder verklebt. Vom grösseren Zuschnitt bleibt auf jeder Längsseite je ein Streifen 9 frei, welcher anschliessend mit der Oberhaut 4 bzw. der Unterhaut 5 verklebt oder verschweisst wird.

Angeschnitten an die Stege 7 ist gemäss Fig. 6 je ein Streifen 11. Diese beiden Streifen 11 werden an den Rändern ebenfalls miteinander verbunden und erzeugen so einen Luftkanal 12. In diesen kann ein Spreizelement 13 eingelegt sein, welches den Luftkanal auch bei Biegungen immer offen hält.

Für die zweite Variante gemäss Fig. 4 werden beide Zuschnitte für die Stege 7 gleich ausgeführt, auf ihren Längsseiten jedoch nicht verbunden.

Soll ein sich quer durch das Sitzkissen hindurchziehender Steg nur teilweise adaptiv - also mit zwei Stegen 7 - ausgeführt werden, so kann gemäss Fig. 7 vorgegangen werden. Hier weisen die Zuschnitte je zwei Streifen 11 für Luftkanäle 12 auf, je einen an jeder Seite des Zuschnittes. Quer durch die Zuschnitte der Stege 7 werden beispielsweise und in der Regel zwei Schweiss- oder Klebenähte 14 eingelegt, welche den Zuschnitt in drei Zonen unterteilen: aussen und angrenzend an die Luftkanäle 12, also in Randzonen 15, sind die Stege 7 adaptiv wie anhin beschrieben. Zwischen den Schweiss- oder Klebenähten 14 entsteht eine mittlere Zone 16, wo lediglich zwei Stege 6 nebeneinander liegen; da keine Druckluft dazwischen gelangt, ist diese mittlere Zone 16 nicht adaptiv.

Fig. 8 ist ein Schnitt BB (gemäss Fig. 1) durch das Sitzkissen 1, und damit eine Draufsicht auf einen doppelten Steg 7. Die Stege 6, 7 verbinden Ober- und Unterhaut 4, 5 im Wesentlichen über die ganze Breite des Sitzkissens 1, lediglich in Randbereichen 17 ist die Hülle 3 frei. Hier findet auch der Druckausgleich innerhalb des Sitzkissens 1 statt. In diesen Randbereichen 17 werden vorzugsweise auch die Luftkanäle 12 angeordnet, welche in der Region des hinteren Endes des Sitzkissens 1 und des unteren des Lehnkissens 2 aus diesen herausgeführt und mit einer Druckluftsteuerung verbunden werden. In dieser genannten Region sind auch die Drucklufteinspeisungen für die Kissen 1, 2 angeordnet.

Durch geeignetes Gruppieren und Zusammenfassen von doppelten Stegen 7 ist es erfindungsgemäss möglich, jede Region des Sitzkissens 1 durch Anwendung von Druckluft adaptiv auszuführen.

Was vorstehend anhand der Fig. 2 bis 7 für das Sitzkissen 1 beschrieben ist, gilt in gleicher Weise selbstverständlich auch für das Lehnkissen 2. Bei diesen ist vorzugsweise, aber nicht ausschliesslich, die Lumbarregion des Passagiers hinsichtlich der Adaptivität von Interesse. Dabei ist zu berücksichtigen, dass, abhängig von der Körpergrösse des Passagiers, die genaue Lage der Lumbarregion unterschiedlich ist.

Die Aufgabe des Zusammenfassen, Gruppierens und Lokalisierens von doppelten Stegen 7 ist Aufgabe einer pneumatischen Steuerung. Deren Aufbau liegt ausserhalb der hier beschriebenen Erfindung.

Fig. 9 ist die - in der Art der Darstellung der Fig. 1 entsprechende - Zeichnung eines zweiten Ausführungsbeispiels von Sitz- und Lehnkissen 1, 2. Dieses Ausführungsbeispiel weist gegenüber jenem von Fig. 1 komplexere Konturen auf. Diese können durch den Zuschnitt der Stege 6, 7 und der Hülle 3 erzeugt werden, ohne den technischen Gehalt des in Fig. 2 bis 7 dargestellten Aufbaus zu beeinflussen. Die adaptive Wirkung der doppelten Stege 7 kann zudem leicht über die Dicke der Kissen 1, 2 und den Aufbau der doppelten Stege 7 beeinflusst werden.

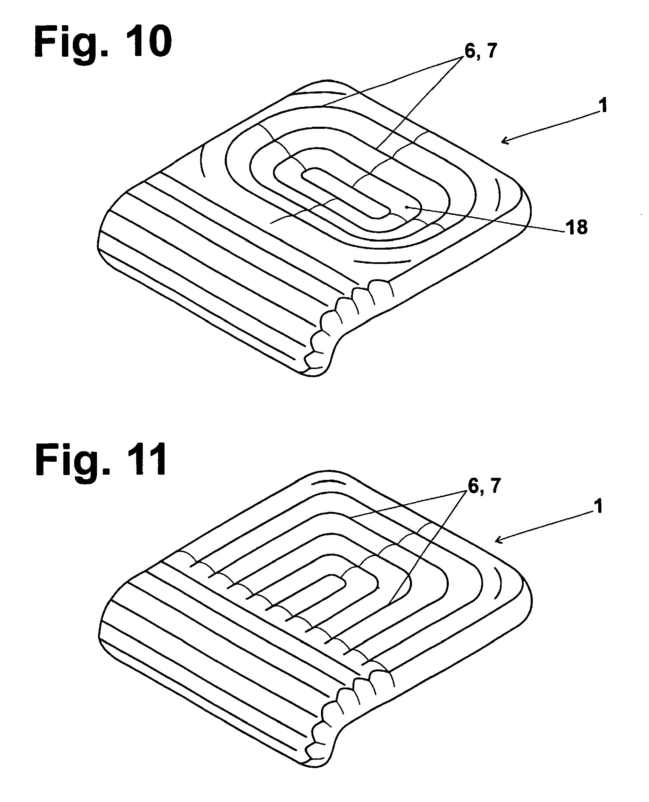

Fig. 10 zeigt ein drittes Ausführungsbeispiel in der Form eines Sitzkissens 1. Um die Ergonomie weiter zu verbessern sind die Stege 6, 7 in der Region des Gesässes im Wesentlichen in der Art konzentrischer Ellipsen angeordnet. Damit kann das Sitzkissen in der Form einer Wanne 18 gestaltet werden. Zwischen den ellipsenartigen Stegen 6, 7 entstehen naturgemäss ebenfalls ellipsenartige Luftkammern. Diese Luftkammern können einzeln oder in Gruppen separat mit Druckluft versorgt werden, was es erlaubt, die Härte des Kissens 1 in der Region des Gesässes zu wählen. Werden die konzentrisch ellipsenartig angeordneten Stege 6, 7 ganz oder teilweise als doppelte Stege 7 ausgeführt, ist zusätzlich die Form der Wanne 18 veränder- und einstellbar.

Fig. 11 ist ein viertes Ausführungsbeispiel ebenfalls in der Form eines Sitzkissens 1. Um eine ergonomische Form zu erhalten, wurden hier in der Region des Gesässes und der Oberschenkel mehrere U-förmige Stege 6, 7 im Sitzkissen integriert. Die U-Form entspricht im Wesentlichen der Auflagefläche einer sitzenden Person. Werden die U-förmigen Stege 6, 7 als doppelte Stege 7 ausgeführt, kann mit dieser Massnahme auf einfache Weise der Bereich, welcher im Sitzkissen 1 durch eine Person belastet wird, adaptiv gestaltet werden.

Die Befestigung von Sitz- und Lehnkissen 1, 2 in einer gegebenen Sitzstruktur oder Sitzschale geschieht vorzugsweise durch je zwei oder mehr Haftverschluss-Streifen, die an der Unterhaut 5 und an der Sitzstruktur durch Kleben befestigt werden können. Andere Arten der Befestigung der Kissen 1, 2, wie beispielsweise durch Klemmen, Knöpfen, sind ebenfalls erfindungsgemäss.

## Patentansprüche

1. Pneumatisches adaptives Sitz- und Lehnkissen (1, 2) für Fahr- und Flugzeuge die aus einem Sitzkissen (1) und einem Lehnkissen (2), welche verbunden sein können, aufgebaut ist,
**dadurch gekennzeichnet, dass** sowohl Sitz- als auch Lehnkissen (1, 2) folgende gemeinsame Merkmale aufweisen:
- eine luftdichte und mit Druckluft beaufschlagte Hülle (3), welche gegliedert ist in eine Oberhaut (4) und eine Unterhaut (5),
- es sind eine Vielzahl von Stegen (6, 7) vorhanden, welche zwischen Ober- und Unterhaut (4, 5) angeordnet sind und diese verbinden,
- von den Stegen (6, 7) sind die ersten als einfache Stege (6), die zweiten als doppelte Stege (7) ausgeführt, so dass zwischen jeweils zwei Stegen (7) mindestens ein Hohlraum (10) entsteht, und dieser mindestens eine Hohlraum (10) gegenüber seiner Umgebung, bis auf eine Öffnung zur Zu- und Ableitung von Druckluft, luftdicht abgeschlossen ist,
- das Innere der Hülle kann mit Druckluft vom Druck p₁ beaufschlagt werden,
- die Hohlräume (10) können mit Luftdrucken p₂ > p₁ beaufschlagt werden.

2. Pneumatisches Sitz- und Lehnkissen nach Patentanspruch 1, **dadurch gekennzeichnet, dass** die doppelten Stege (7) so ausgeführt sind, dass
- der erste der Stege (7) längs zweier Streifen (9) mit dem zweiten Steg (7) verbunden und seine Breite um die Breite dieser zwei Streifen (9) schmaler ausgeführt ist, als jene des zweiten Steges (7),
- der zweite Steg (7) entlang zweier Streifen (9) sowohl mit der Oberhaut (4) als auch der Unterhaut (5) verbunden ist,
- die schmalen Seiten je zweier Stege (7) längs eines Streifens (9) miteinander verbunden sind, so dass der Hohlraum (10) zwischen den Stegen (7) durch die Verbindungen längs der Streifen (9) abgeschlossen wird.

3. Pneumatisches Sitz- und Lehnkissen nach Patentanspruch 1, **dadurch gekennzeichnet, dass** die Zuschnitte eines doppelten Steges (7) so ausgeführt sind, dass sie untereinander gleich gross sind, beide unmittelbar benachbart zueinander längs je eines Streifens (9) mit der Oberhaut (4) und der Unterhaut (5) verbunden sind, und die schmalen Seiten je zweier Stege (7) längs eines Streifens (9) miteinander verbunden sind, so dass der Hohlraum (10) zwischen den Stegen (7) durch die Verbindungen längs der Streifen (9) abgeschlossen wird.

4. Pneumatisches Sitz- und Lehnkissen nach Patentanspruch 2 oder 3, **dadurch gekennzeichnet, dass** die doppelten Stege 7 mindestens ein weiteres mal entlang zweier Streifen 9 miteinander verbunden sind, so dass mindestens zwei Hohlräume 10 entstehen.

5. Pneumatisches Sitz- und Lehnkissen nach Patentanspruch 2 oder 3, **dadurch gekennzeichnet, dass** an die Zuschnitte für die doppelten Stege (7) mindestens am einen Ende Streifen (11) angeschnitten sind, welche, an ihren Rändern miteinander verbunden, Luftkanäle (12) für die Druckbeaufschlagung der Hohlräume (10) bilden.

6. Pneumatisches Sitz- und Lehnkissen nach Patentanspruch 5, **dadurch gekennzeichnet, dass** in die Luftkanäle (12) Spreizelemente (13) eingelegt sind, welche verhindern, dass die Luftkanäle durch Knicken verschlossen werden.

7. Pneumatisches Sitz- und Lehnkissen nach Patentanspruch 2 oder 3, **dadurch gekennzeichnet, dass** bei ausgewählten Paaren von doppelten Stegen (7) quer zu deren Längserstreckung je zwei Schweiss- oder Klebestellen angebracht werden, welche sich über die ganze Höhe der Stege erstrecken und dadurch je zwei Randzonen (15) und eine mittlere Zone (16) der Hohlräume (10) definieren, wobei die Randzonen (15) mit Druckluft beaufschlagt werden können und die mittlere Zone (16) von jeder Druckluftzufuhr abgeschlossen ist.

8. Pneumatisches Sitz- und Lehnkissen nach einem der Patentansprüche 1 bis 7, **dadurch gekennzeichnet, dass** alle Verbindungen zwischen Stegen (6, 7) und Hülle (3), diese gegliedert in Ober- und Unterhaut (4, 5), ferner von doppelten Stegen (7) untereinander und den Zuschnitten (11) für die Luftkanäle (12), durch Kleben erzeugt sind.

9. Pneumatisches Sitz- und Lehnkissen nach einem der Patentansprüche 1 bis 7, **dadurch gekennzeichnet, dass** alle Verbindungen zwischen Stegen (6, 7) und Hülle (3), diese gegliedert in Ober- und Unterhaut (4, 5), ferner von doppelten Stegen (7) untereinander und den Zuschnitten (11) für die Luftkanäle (12), durch Schweissen erzeugt sind.

10. Pneumatisches Sitz- und Lehnkissen nach Patentanspruch 1, **dadurch gekennzeichnet, dass** die Hohlräume (10) zwischen den doppelten Stegen (7) je einzeln mit Druckluft versorgt werden können.

11. Pneumatisches Sitz- und Lehnkissen nach Patentanspruch 1, **dadurch gekennzeichnet, dass** die Hohlräume (10) zwischen den doppelten Stegen (7) in ausgewählten Gruppen zusammengefasst und so miteinander mit Druckluft versorgt werden können.

12. Pneumatisches Sitz- und Lehnkissen nach einem der Patentansprüche 1 bis 7, **dadurch gekennzeichnet, dass** das Material für die Hülle (3), die Stege (6, 7) und die Zuschnitte (11) für die Luftkanäle (12) aus Kunststoff besteht.

13. Pneumatisches Sitz- und Lehnkissen nach einem der Patentansprüche 1 bis 7, **dadurch gekennzeichnet, dass** das Material für die Hülle (3), die Stege (6, 7) und die Zuschnitte (11) für die Luftkanäle (12) aus kunststoffkaschiertem textilen Material besteht.

14. Pneumatisches Sitz- und Lehnkissen nach Patentanspruch 1, **dadurch gekennzeichnet, dass** Sitz- und Lehnkissen (1, 2) an der Sitzkonstruktion mit Haftverschlüssen befestigt werden können, welche sowohl an der Sitzkonstruktion, als auch an Sitz- und Lehnkissen durch Kleben befestigt sind.

## Claims

1. A pneumatic adaptive seat cushion (1) and backrest cushion (2) for vehicles, including aircraft, made from a seat cushion (1) and a backrest cushion (2) that can be connected, **characterised in that** both the seat cushion (1) and the backrest cushion (2) comprise the following common characteristics:
• an airtight shell (3) that is pressurised by compressed air, which shell (3) comprises an upper skin (4) and a lower skin (5);
• the presence of a plurality of webs (6, 7) that are arranged between the upper skin (4) and the lower skin (5) and that connect these skins;
• of the webs (6, 7) the first are single webs (6), the second are dual webs (7) so that in each case between two webs (7) at least one cavity (10) arises, and this cavity (10), of which there is at least one, in relation to its environment is closed off so as to be airtight, with the exception of an opening to let compressed air in and out;
• the interior of the shell can be subjected to compressed air of a pressure p₁; and
• the cavities (10) can be subjected to air pressures p₂ > p₁.

2. The pneumatic seat cushion and backrest cushion according to claim 1, **characterised in that** the dual webs (7) are designed such that
• the first of the webs (7) is connected along two strips (9) to the second web (7), and the width of said first web (7) is narrower than the width of the second web (7) by the width of these two strips (9) ;
• the second web (7) is connected both to the upper skin (4) and to the lower skin (5) along two strips (9) ;
• the narrow sides of each two webs (7) are connected to each other along a strip (9) so that the cavity (10) between the webs (7) is closed off by the connections along the strip (9).

3. The pneumatic seat cushion and backrest cushion according to claim 1, **characterised in that** the cut-outs of a dual web (7) are designed such that they both are of the same size, both are immediately adjacent to each other along a strip (9) each connected to the upper skin (4) and the lower skin (5), and the narrow sides of every two webs (7) are connected to each other along a strip (9) so that the cavity (10) between the webs (7) is closed off by the connections along the strips (9).

4. The pneumatic seat cushion and backrest cushion according to claim 2 or 3, **characterised in that** the dual webs (7) are connected to each other at least once more along two strips 9 so that at least two cavities (10) are formed.

5. The pneumatic seat cushion and backrest cushion according to claim 2 or 3, **characterised in that** the cut-outs for the dual webs (7) at least at one end comprise strips (11) which, connected to each other by their borders, form air channels (12) for pressurising the cavities (10).

6. The pneumatic seat cushion and backrest cushion according to claim 5, **characterised in that** spreader elements (13) have been placed in the air channels (12), which spreader elements (13) prevent the air channels from being closed as a result of buckling.

7. The pneumatic seat cushion and backrest cushion according to claim 2 or 3, **characterised in that** in selected pairs of dual webs (7) two weld- or adhesive positions are placed across the longitudinal extension of said webs (7), which weld- or adhesive positions extend along the entire height of the webs, each one thus defining two border zones (15) and a middle zone (16) of the cavities (10), wherein the border zones (15) can be pressurised with compressed air, and the middle zone (16) is shut off from any supply of compressed air.

8. The pneumatic seat cushion and backrest cushion according to any one of claims 1 to 7, **characterised in that** all the connections between the webs (6, 7) and the shell (3), the latter comprising an upper skin (4) and a lower skin (5), and furthermore of dual webs (7) among each other and of the cut-outs (11) for the air channels (12) are produced by gluing.

9. The pneumatic seat cushion and backrest cushion according to any one of claims 1 to 7, **characterised in that** all the connections between the webs (6, 7) and the shell (3), the latter comprising an upper skin (4) and a lower skin (5), and furthermore of dual webs (7) among each other and of the cut-outs (11) for the air channels (12) are produced by welding.

10. The pneumatic seat cushion and backrest cushion according to claim 1, **characterised in that** each of the cavities (10) between the dual webs (7) can be supplied individually with compressed air.

11. The pneumatic seat cushion and backrest cushion according to claim 1, **characterised in that** the cavities (10) between the dual webs (7) can be taken together in selected groups and can thus together be supplied with compressed air.

12. The pneumatic seat cushion and backrest cushion according to any one of claims 1 to 7, **characterised in that** the shell (3), the webs (6, 7) and the cut-outs (11) for the air channels (12) are made of a plastic material.

13. The pneumatic seat cushion and backrest cushion according to any one of claims 1 to 7, **characterised in that** the shell (3), the webs (6, 7) and the cut-outs (11) for the air channels (12) are made of a plastic-coated textile material.

14. The pneumatic seat cushion and backrest cushion according to claim 1, **Characterised in that** the seat cushion (1) and the backrest cushion (2) can be attached to the seat structure by means of adhesive-closure strips that can be attached by adhesion both to the seat structure and to the seat cushion and the backrest cushion.

## Revendications

1. Coussin d'assise et de dossier pneumatique adaptatif (1, 2) pour véhicules automobiles et pour avions, composé d'un coussin d'assise (1) et d'un coussin de dossier (2) pouvant être reliés, **caractérisé en ce que** le coussin d'assise et le coussin de dossier présentent tous deux les caractéristiques suivantes :
- une housse (3) hermétique alimentée en air pressurisé, qui se compose d'une couche supérieure (4) et d'une couche inférieure (5),
- de nombreuses tiges (6, 7) sont disposées entre la couche supérieure et la couche inférieure (4, 5) en reliant ainsi les deux couches;
- parmi les tiges (6, 7), les premières sont conçues comme des tiges simples (6); les deuxièmes comme des doubles tiges (7), de façon à former à chaque fois au moins un espace creux (10) entre deux tiges et de façon à ce que chaque espace creux (10) soit isolé hermétiquement par rapport à son environnement, mis à part une ouverture pour l'arrivée et l'évacuation de l'air,
- L'intérieur de la housse peut être alimenté en air pressurisé au moyen de la pression p1,
- Les espaces creux (10) peuvent être alimentés à l'aide de la pression p2 > p1.

2. Coussin d'assise et de dossier pneumatique selon la revendication 1, **caractérisé en ce que** les doubles tiges (7) sont conçues de telle façon que :
- la première des tiges (7) est reliée avec la deuxième tige (7) le long de deux bandes (9) et sa largeur est inférieure à celle de la deuxième tige, pour l'équivalent de la largeur de ces deux bandes (9),
- la deuxième tige (7) est reliée aussi bien à la couche supérieure (4) qu'à la couche inférieure (5) le long de deux bandes (9),
- les côtés étroits de chacune des doubles tiges (7) sont reliés ensemble le long d'une bande (9), de façon à ce que l'espace creux (10) entre les tiges (7) soient isolés hermétiquement grâce aux liaisons le long des bandes (9).

3. Coussin d'assise et de dossier pneumatique selon la revendication 1, **caractérisé en ce que** les découpes des doubles tiges (7) sont conçues de façon à être toutes les deux de la même taille, à se trouver directement côte à côte et à être reliées à la couche supérieure (4) et à la couche inférieure (5) le long d'une bande (9), et de façon à ce que les côtés étroits de doubles tiges (7) soient reliés ensemble le long d'une bande (9), pour que l'espace creux (10) entre les tiges (7) soit isolé par les liaisons le long des bandes (9).

4. Coussin d'assise et de dossier selon les revendications 2 ou 3, **caractérisé en ce que** les doubles tiges (7) soient reliées au moins encore une autre fois entre elles le long des deux bandes (9), pour faire apparaître au moins deux espaces creux (10).

5. Coussin d'assise et de dossier selon les revendications 2 ou 3, **caractérisé en ce que** des bandes (11) reliées sur leurs bords sont découpées dans les découpes des deux doubles tiges (7) sur au moins une extrémité, pour former des canaux d'air (12) capables de recevoir l'air pressurisé destiné aux espaces creux (10).

6. Coussin d'assise et de dossier pneumatique selon la revendication 5, **caractérisé en ce que** les canaux d'air (12) comprennent des éléments d'écartement (13) qui empêchent les canaux d'air de se fermer sous l'effet d'une courbure.

7. Coussin d'assise et de dossier pneumatique selon les revendications 2 ou 3, **caractérisé en ce que** certaines paires de doubles tiges (7) sélectionnées comportent chacune deux points de soudure ou de collage en travers de leur longueur, qui s'étendent sur toute la hauteur des tiges et qui définissent ainsi chacune deux zones de bord (15) et une zone du milieu (16) dans les espaces creux (10), les zones de bord (15) pouvant être remplies d'air comprimé et la zone du milieu (16) étant isolée de toute alimentation d'air comprimé.

8. Coussin d'assise et de dossier pneumatique selon l'une des revendications 1 à 7, **caractérisé en ce que** toutes les liaisons entre les tiges (6, 7) et la housse (3), elle-même divisée en une couche inférieure et une couche supérieure (4, 5), et entre les doubles tiges (7) entre elles et les découpes (11) destinées aux canaux d'air (12), sont réalisées par collage.

9. Coussin d'assise et de dossier pneumatique selon l'une des revendications 1 à 7, **caractérisé en ce que** toutes les liaisons entre les tiges (6, 7) et la housse (3), elle-même divisée en une couche inférieure et une couche supérieure (4, 5), et entre les doubles tiges (7) entre elles et les découpes (11) destinées aux canaux d'air (12), sont réalisées par soudage.

10. Coussin d'assise et de dossier pneumatique selon la revendication 1, **caractérisé en ce que** les espaces creux (10) entre les doubles tiges (7) peuvent être alimentés en air comprimé de façon individuelle.

11. Coussin d'assise et de dossier pneumatique selon la revendication 1, **caractérisé en ce que** les espaces creux (10) entre les doubles tiges (7) peuvent être sélectionnés pour être alimentées en air comprimé de façon groupée.

12. Coussin d'assise et de dossier pneumatique selon l'une des revendications 1 à 7, **caractérisé en ce que** la housse (3), les tiges (6, 7) et les découpes (11) destinées aux canaux d'air (12) sont conçues dans une matière synthétique.

13. Coussin d'assise et de dossier pneumatique selon l'une des revendications 1 à 7, **caractérisé en ce que** la housse (3), les tiges (6, 7) et les découpes (11) destinées aux canaux d'air (12) sont conçues dans un tissu à doublage synthétique.

14. Coussin d'assise et de dossier pneumatique selon la revendication 1, **caractérisé en ce que** les coussins d'assise et de dossier (1, 2) peuvent être fixés sur la structure du siège à l'aide de bandes auto-agrippantes qui peuvent être collées aussi bien sur la structure du siège que sur les coussins d'assise et de dossier.
